Europäisches Patentamt

(19) European Patent Office

Office européen des brevets

(11) Publication number: **0 170 507 B1**

# EUROPEAN PATENT SPECIFICATION

(45) Date of publication of patent specification: 09.10.91    (51) Int. Cl.⁵: **A23C 11/10, A23C 20/02**

(21) Application number: 85305348.6

(22) Date of filing: 26.07.85

(54) Process of manufacturing bean curd and bean milk.

(30) Priority: 30.07.84 JP 159987/84

(43) Date of publication of application:
05.02.86 Bulletin 86/06

(45) Publication of the grant of the patent:
09.10.91 Bulletin 91/41

(84) Designated Contracting States:
DE FR GB

(56) References cited:
GB-A- 2 006 047
US-A- 3 712 823
US-A- 4 000 326

PATENT ABSTRACTS OF JAPAN, vol. 6, no.
19 (C-90)[897], 3rd February 1982; & JP-A-56
140 867 (TAKAI SEISAKUSHO K.K.)
04-11-1981

PATENT ABSTRACTS OF JAPAN, vol. 8, no.
30 (C-209)[1467], 8th February 1984; & JP-
A-58 193 668 (MASAMICHI NAKAMUTA)
11-11-1983

PATENT ABSTRACTS OF JAPAN, vol. 6, no.
15 (C-89)[893], 28th January 1982; & JP-A-56
137 861 (MASAKICHI KAWAHARA) 28-10-1981

PATENTS ABSTRACTS OF JAPAN, vol. 6, no.
114 (C-110)[992], 25th June 1982; & JP-A-57
43 655 (NIPPON KIKOU K.K.) 11-03-1982

(73) Proprietor: Asahi Foods Company Ltd.
17-8, Mochida 2-chome
Gyoda Saitama(JP)

(72) Inventor: Nakagawa, Atsushi
28-4, Yachiyodaihigashi 1, Yachiyo
Chiba(JP)
Inventor: Shimoda, Kazuto
2-7, Mochida 4
Gyoda, Saitama(JP)
Inventor: Murasawa, Hisashi
Kadoi-danchi 4-206, No. 17, Oshiage
Gyoda, Saitama(JP)

(74) Representative: Ablewhite, Alan James et al
MARKS & CLERK 57/60 Lincoln's Inn Fields
London WC2A 3LS(GB)

EP 0 170 507 B1

## Description

Field of the Invention

The present invention relates generally to the foods processing technology, and more particularly to the manufacture of bean milk and/or bean curd from the resulting bean milk by using raw soybeans.

Description of the Prior Art

The prior art method that is used in manufacturing bean milk and/or bean curd consists essentially of soaking raw soybeans with their outer coats or skins in water for a long period of time, milling them into fine particles, boiling those particles under hot steam with an added substance that helps remove the produced foams or bubbles, and then removing the solids from the result with the remaining liquid being used as bean milk. The thus obtained bean milk is further processed by adding a solidifier to it at a constant temperature and then allowing the result to solidify as a whole or in separate boxes. The result is a bean curd.

The disadvantage of the above conventional method is that as the raw soybeans are soaked in water as they carry their outer coats or skins, an extended period of time (such as eight to twelve hours) is usually required until they can contain an adequate amount of water required for the subsequent processing steps. Once the soybeans have been soaked, therefore, they must be used for the subsequent processing steps even though they are no longer needed. Whenever additional quantities of soybeans are to be processed, therefore, the corresponding additional period of time would be required at this stage. This raises a problem particularly when any additional quantity of soybeans must be added to the quantity of those which are currently being processed, since a separate processing must be done which will require an additional processing time, which is usually about ten hours. The preceding quantity of soybeans that has been processed at this initial stage must wait for the processing of the following quantity of soybeans to be completed, in order to proceed to the subsequent processes. It is also observed that the raw soybeans in their fine particles by nature tend to produce foams or bubbles when they are boiled under hot steam. For this reason, it is essential to provide means that helps remove such foams or bubbles during the boiling process. For the conventional method, this means is provided in the form of such substances as silicone resins, calcium carbonate, vegetable oil, highly oxidized waste oil, fatty acid monoglyceride, slaked lime, and raw rice bran which are added to those bean particles singly or in any combination in a ratio of 0.1 to 1.0% by weight with respect to the total amount of the soybeans. In fact, those substances degrade the final product since they are retained in it and obbiviously have an inadverse effect on its flavor.

Another disadvantage is the fact that raw soybeans are triturated with their outer coats or skins on. In this case, any elements contained in the seed skins and hypocotyl that taste astrigent or bitter very often remain in the final product, which gives a bitter or astringent taste. This presents an additional problem in that the efficiency of this initial process stage is markedly decreased. In order to solve this problem, an attempt has been to remove the outer skins from the raw soybeans and then break those soybeas into pieces. It is observed, however, that in this way the protein contained in the naked soybeans is hard to solidify, which makes the final product less resilient. This results in a lower yield. In addition, the soybeans thus processed cannot be used for other than the bean soup.

## SUMMARY OF THE INVENTION

In order to solve the above problem, it is one object of the present invention to offer an improved method of manufacturing bean milk and bean curd from raw soybeans. The method according to the present invention may be characterized by these processing steps. The first step is to allow any desired quantity of raw soybeans to become dried at a low temparatue of below 40°C (at any temperature lower than that at which the protein contained in the raw soybeans becomes denatured), and then crush them into rough pieces and remove the outer coats or skins from those pieces. For the best result, the crushing may be done to provide particle sizes of 1/4 to 1/8 of the original sizes. Then, those pieces are soaked in water until they contain about 60% of water. They are further reduced to fine particles by grinding or milling. The grinding or milling occurs with the objects soaked in the water. Thus, no disposal of the water used during this process is required. No environmental problem is caused by wasting water. The second step is to boil the result from the first step in a closed steamer vessel, which occurs for about four minutes at temperatures of about 105°C. During this process, a jet of pressurized steam of gauge pressures of 1.0 kg/c m$^2$ to 2.5 kg/cm$^2$ which are slightly higher than the internal pressure inside the vessel is blown onto the

2

surface, thus removing the produced foams or bubbles from the surface. The amount of the pressurized steam to be supplied varies, depending on the amount of the content to be processed inside the steamer vessel, but about 10% of the total steam to be utilized provides the best result.

The result obtained by the second step goes through the filtering process, and the solids and liquid are separated. The resulting liquid is bean milk, which will be used for making bean curd in an additional process. During this process, a solidifier (such as glucono delta lactone (GDL) or salts is added to the bean milk under the ambient temperature range of 70 °C to 90 °C. The amount of the solidifier to be added may preferably range between 0.1% and 1.0% by weight. Then, stirring occurs so that a uniform mixture can be obtained. The resulting mixture is allowed to solidify for ten to twenty minutes, until it settles itself. The thus obtained result is a silk-strained bean curd, which is called "kinugosi-tofu" in Japan. Alternatively, a different-style bean curd, which is called "momentofu" or "cotton-like bean curd", may be obtained by placing the above same mixture in another box before it becomes completely solid and then shaping it into a bean curd form under an applied compression.

The above bean milk may be processed differently, so that another different-style bean curd can be obtained. In this case, the bean milk is cooled to a temperture range of 5 °C to 20 °C, and then 0.1% to 1.0% by weight of solidifier is added to it. A uniform mixture is obtained by stirring, and is distributed into boxes or packages. The boxes containing the mixture are warmed by hot water up to 80 °C to 80 °C, and the contents are allowed to solidify for forty to sixty minutes. The result is a filler or packaged bean curd, which is called "juten-tofu".

The bean milk itself may be used as a drink product. In this case, an appropriate amount of an additional natural substance (such as maltose liquid, corn salad oil, etc.) is added to the bean milk which has been cooled, and a stirring occurs so that a uniform mixture can be obtained. The result is a flavored bean milk, which can be packaged individually as a product.

The initial process of allowing the raw soybeans to be dried at the low temperature is particularly provided so that the drying can occur without affecting the nature of the protein ingredient contained in the soybeans, which may be affected under the high temperature environment.

It is usually observed that protein begins to have its property affected by the applied beating, when its temperature rises above 80 °C. For the mass production of the bean paste or miso and the bean soup beverage using the soybeans whose skins have previously been removed, it is the practice that they are kept at temperatures of 70 °C to 80 °C. The results that have been obtained from the study show that the NSI (nitrogen solubility index) value is gradually decreasing when the temperature rises above 45 °C, and the soybeans in their gel state when they solidify lose their resilience.

This low-temperature drying process han an additional effect of making it easy to remove the outer coats or skins from the soybean cotyledons or seed leaves during a subsequent rough crushing process.

| °C | 30 | 35 | 40 | 45 | 50 | 60 | 70 | 80 |
|---|---|---|---|---|---|---|---|---|
| NSI | 80.4 | 80.5 | 80.1 | 77.7 | 67.0 | 58.5 | 57.2 | 56.6 |
| Break | 55 | 55 | 55 | 48 | 32 | 27 | - | - |

For the above reason, the rough crushing process which follows the drying process can occur with a high efficiency although the soybeans carry their outer coats or skins. At this stage, therefore, the rough crushing provides an advantage over the fine-particle milling. It is also to be noted that the rough crushing process at this stage is better for the subsequent processes such as the removal of the outer skins, the water soaking process, etc. Through the rough crushing and outer coat removing processes, the subsequent water soaking process can be quickened. For example, the soaking process which would require eight to twelve hours when the prior art method is employed can be completed in as short as one hour (exactly, forty to sixty minutes). The water used during the soaking process is totally utilized without producing any possible waste water. As the subsequent fine-particle milling process occurs for the above-processed soybeans with their outer coats removed, it can be done efficiently so that it provides any desired, uniform particle sizes. Thus, a higher yield results. As described, the outer coats or skins and hypocotyls contain astringent and bitter ingredients. According to the present invention, however, the fine-particle milling process occurs after those ingredients have been removed. As such, the quality of the resulting product can be improved markedly.

As a subsequent step, the steam boiling process occurs for the result obtained in its fine particle forms. It is known that it contains elements which tend to foam and produce a high surface tension. such as saponins and proteins. Because of those properties of the elements, it is necessary to eliminate such foams by some means during the boiling process. The prior art method uses such substances as mentioned earlier for this purpose. As also mentioned earlier, those substances badly affect the flavor of the product. According to the method offered by the present invention, this problem has been solved by blowing a jet of pressurized steam onto the surface, thus eliminating the produced foams or bubbles. As such, the flavor of the product is not affected, and a better taste can be obtained.

The solid and liquid separation takes place by means of a centrifugal separation process using the screw decanter, for example.

The features of the present invention include the substantial reduction of the time required for making the soybeans swell. This can be achieved because the soybeans are soaked in water, following the rough crushing and outer coat removing processes. Another feature is the line production that is made possible by the above feature. The manufacture of any additional quantities is allowed for. The foams that are produced on the surface during the steam boiling process can advantageously be eliminated by blowing the jet of steam.

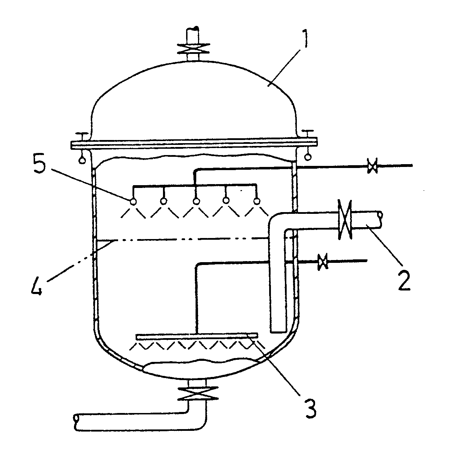

BRIEF DESCRIPTION OF THE DRAWING

A single figure illustrates the construction of the steamer vessel used in practicing the method according to the invention, and how a jet of pressurized steam is to be blown onto the surface.

DETAILS OF THE PREFERRED EMBODIMENTS

The following examples are presented to provide a detailed description of the method according to the present invention.

EXAMPLE 1

10kgs of raw soybeans containing 13 % moisture are allowed to become dried by delivering a stream of hot air heated to 60 °C, until the soybeans are heated to 40 °C and the moisture contained is reduced to about 12 %. Then, the dry soybeans are crushed to rough sizes of 1/4 to 1/8 of the original sizes. During this crushing process, the seeds and outer skins or coats are separated. This separation continues until 95 % of the outer skins are detached.

The detached outer skins are removed, and the result which now weighs 9 kgs (minus 1kg of the removed skins) is soaked in 27 $\ell$ of water which is at 18 °C, until it contains 60% of the water (about fifty minutes). Then, it is milled into fine particles of about 20 mesh sizes by gradually adding an additional 27 $\ell$ of water. The resulting product (which contains 63 kg of water) is delivered into the steam boiling vessel 1 (shown in the figure) through the delivery pipe 2. Inside the steam boiling vessel 1, there is a steam supply pipe 3 having supply ports located near the bottom. Nozzles 5 are located above the liquid level 4 inside the vessel 1, from which a jet of steam is supplied. The steam supply pipe 3 supplies steam under a gauge pressure of 1.2 kg/cm². The steam supply continues for five minutes, raising the internal temperature up to 105 °C. The boiling process occurs for four minutes at the constant temperature of 105 °C. Then, the result obtained by the boiling process is placed into the centrifugal separator, where the solid and liquid are separated. As a result, 18 kgs of bean-curd refuse (containing 17% solids), which is called "okara", and 48 kgs of bean milk (containing 10% solids, 80 °C ) are obtained.

The amount of steam supplied from the nozzles 5 should preferably be equal to about 10% of the total amount of the steam supplied from the steam supply pipe 3.

EXAMPLE 2

10 kgs of raw soybeans containing 13% moisture are allowed to become dried by delivering a stream of hot air heated to 60 °C, until the soybeans are heated to 40 °C and the moisture contained is reduced

4

to about 12%. Then, the dry soybeans are crushed to rough sizes of 1/4 to 1/8 of the original sizes. During this crushing process, the seeds and outer skins or coats are separated. This separation continues until 95% of the outer skins are detached.

The detached outer skins are removed, and the result which now weigh 9 kgs (minus 1 kg of the removed skins) is soaked in 27 ℓ of water which is at 18°C, until it contains 60% of the water (about fifty minutes). Then, it is milled into fine particles of about 20 mesh sizes by gradually adding an additional 27 ℓ of water. The resulting product (which contains 63 kg of water) is delivered into the steam boiling vessel 1 (shown in the figure) through the delivery pipe 2. Inside the steam boiling vessel 1, there is a steam supply pipe 3 having supply ports located near the bottom. Nozzles 5 are located above the liquid level 4 inside the vessel 1, from which a jet of steam is supplied. The steam supply pipe 3 supplies steam under a gauge pressure of 1.2 kg/cm². The steam supply continues for five minutes, raising the internal temperature up to 105°C. The boiling process occurs for four minutes at the constant temperature of 105°C. Then, the result obtained by the boiling process is placed into the centrifugal separator, where the solid and liquid are separated. As a result, 18 kgs of bean-curd refuse (containing 17% solids), which is called "okara", and 48 kgs of bean milk (containing 10% solids, 80°C) are obtained.

As an additional step, 192 g of calcium sulfate (0.4% by weight) is added to the resulting bean milk, and a uniform mixture is obtained by stirring. Then, the mixture is allowed to solidify at 85°C for ten minutes and is then placed in a box, where it is dewatered. Then, it is watered at 18°C for fifteen minutes and is then contained in individual packages. The contents in those packages, which are still at 35°C, are cooled by chilled water (7°C) for thirty minutes. Thus, a bean curd product is obtained.

EXAMPLE 3

10 kgs of raw soybeans containing 13% moisture are allowed to become dried by delivering a stream of hot air heated to 60°C, until the soybeans are heated to 40°C and the moisture contained is reduced to about 12%. Then, the dry soybeans are crushed to rough sizes of 1/4 to 1/8 of the original sizes. During this crushing process, the seeds and outer skins or coats are separated. This separation continues until 95% of the outer skins are detached.

The detached outer skins are removed, and the result which now weigh 9 kgs (minus 1 kg of the removed skins) is soaked in 27 ℓ of water which is at 18°C, until it contains 60% of the water (about fifty minutes). Then, it is milled into fine particles of about 20 mesh sizes by gradually adding an additional 27 ℓ of water. The resulting product (which contains 63 kg of water) is delivered into the steam boiling vessel 1 (shown in the figure) through the delivery pipe 2. Inside the steam boiling vessel 1, there is a steam supply pipe 3 having supply ports located near the bottom. Nozzles 5 are located above the liquid level 4 inside the vessel 1, from which a jet of steam is supplied. The steam supply pipe 3 supplies steam under a gauge pressure of 1.2 kg/cm². The steam supply continues for five minutes, raising the internal temperature up to 105°C. The boiling process occurs for four minutes at the constant temperature of 105°C. Then, the result obtained by the boiling process is placed into the centrifugal separator, where the solid and liquid are separated. As a result, 18 kgs of bean-curd refuse (containing 17% solids), which is called "okara", and 48 kgs of bean milk (containing 10% solids, 80°C) are obtained.

As an additional step, the resulting bean milk is cooled to 5°C to 20°C, and then 0.25% by weight of glucono delta lactone is is added as a solidifier to it. Then, stirring occurs until a sufficiently uniform mixture is obtained. The resulting mixture is then distributed into individual packages, which are hermetically sealed. Those packages are then bathed in 80°C to 90°C water. This bathing continues for 40 to 50 minutes, allowing the cotents to solidify. Cooling them results in products.

The foregoing description of the examples has been presented so as to enable any person skilled in the art to understand the features of the present invention. Among others, one feature is the significant reduction of the time required for the water soaking process. The time can be reduced to substantially one-tenth the total time required in practicing the same process for the prior art method. This is because the low temperature drying process immediately followed by the seed and skin separation and the removal of the latter is prerequisite to the water soaking process. This means that the drying process and subsequent soaking process can occur consecutively. Another feature is simply to employ the steam blowing for the purpose of removing the produced foams, rather than relying on the chemical substances which contain the elements that may affect the flavor of the product. Thus, the flavor and quality of the product can be improved. Also, the product can retain its own properties, which would be affected if it would contain any of those undesirable substances.

**Claims**

1. A process for preparing bean milk, or tofu, from raw soybeans enveloped with their thin outer coats or skins, including the steps of milling the beans into fine particles, and boiling those fine particles under hot steam, which comprises the steps of:

allowing the raw soybeans carrying their thin outer coats or skins to become dried under temperature range conditions of up to 40° C;

crushing the dried raw soybeans into particles, thereby detaching the outer coats from the soybean seeds and then removing the detached outer coats from the soybean seeds;

soaking the de-skinned soybean seed particles in water;

milling the water-soaked soybean seed particles into fine particles sizes;

boiling the resulting particles under superheated steam in a closed steamer vessel;

removing any foam or bubbles produced by blowing a jet of pressurized steam into the surface during the steam boiling process; and

separating the steam-boiled result into the solids and liquids being used as a bean milk product.

2. A process as defined in claim 1, wherein the low-temperature drying step takes place at the temperature range between 30° C and 40° C until the moisture contained in the raw soybeans is reduced to between 10% and 14%.

3. A process as defined in claim 1, wherein the water soaking step takes place at the water temperature range of between 15° C and 40° C, for a duration of the time of between 30 and 60 minutes.

4. A process as defined in claim 1, wherein the jet of pressurized steam supplied during the steam boiling step has the gauge pressure range of between 1.0 kg/cm$^2$ and 2.5 kg/cm$^2$ which is slightly higher than the internal pressure produced inside the steamer vessel.

5. A process according to any of claim 1 to 4, in which for the preparation of bean curd, or tofu;

the temperature of the resulting bean milk is lowered to a constant temperature suitable for the solidification method employed;

a solidifier is added to the bean milk while it is maintained at said contstant temperature, the mixture is stirred to form a uniform mixture; and

the uniform mixture is allowed to solidify.

6. A process as defined in claim 5, wherein the bean milk is lowered to a temperature in the range of 80° C to 90° C or 70° C to 85° C, and is maintained at the same temperature range for a duration of between 10 and 20 minutes.

7. A process as defined in claim 5, wherein the temperature of the bean milk is lowered to a constant temperature in the range of from 5° C and 30° C, and a solidifier is added to the bean milk; before allowing the bean milk to solidify, it is placed into the individual packages, and those packages are hermetically sealed and are bathed in 80° C to 100° C hot water or steam for 40 to 60 minutes.

8. A process as defined in claim 5, wherein the solidifier is selected from the group consisting of gluconolactones, bittern, and calcium sulfate.

9. A pressurisable steamer for use in the process of claim 1 comprising a pressure vessel (1) fitted with means (2) for introducing material to be boiled, means for voiding the vessel, means (3) for supplying steam under the surface of material in the vessel and means (5) for supplying a current of steam onto the surface of said material to disperse foam.

**Revendications**

1. Un procédé de préparation de lait de fèves, ou "tofu", à partir de fèves de soja brutes enrobées de leurs fines enveloppes ou peaux extérieures, comprenant les étapes de mouture des fèves en particules fines et de cuisson de ces particules fines à la vapeur surchauffée, comportant les étapes suivantes:

séchage des fèves de soja brutes enrobées de leurs fines enveloppes ou peaux extérieures, en présence de températures atteignant 40° C;

broyage des fèves de soja séchées en particules, avec détachement des enveloppes extérieures des graines des fèves de soja et élimination des enveloppes extérieures détachées des graines des fèves de soja;

trempage des particules des graines des fèves de soja sans peaux dans l'eau;

mouture des particules des graines des fèves de soja trempées dans l'eau en particules fines;

cuisson des particules résultantes à la vapeur surchauffée dans une cuve fermée d'un cuiseur à vapeur;

élimination de toutes les mousses ou bulles formées par injection d'un jet de vapeur sous pression sur la surface pendant le procédé de cuisson à la vapeur; et

séparation du produit résultant de la cuisson à la vapeur en solides et liquides, le liquide étant utilisé comme lait de fèves.

2. Un procédé selon la revendication 1, dans lequel l'étape de séchage à basse température est réalisée en présence de températures comprises entre 30° C et 40° C, jusqu'à réduction à environ 10% et 14% de l'humidité contenue dans les fèves de soja brutes.

3. Un procédé selon la revendication 1, dans lequel l'étape de trempage dans l'eau est réalisée en présence de températures comprises entre 15° C et 40° C, pendant une durée de 30 à 60 minutes.

4. Un procédé selon la revendication 1, dans lequel le jet de vapeur sous pression émis au cours de la cuisson à la vapeur a un intervalle de pression manométrique compris entre 1,0 kg/cm² et 2,5 kg/cm², ce qui est légèrement supérieur à la pression interne établie à l'intérieur de la cuve du cuiseur à vapeur.

5. Un procédé selon l'une quelconque des revendications 1 à 4, dans lequel, en vue de la préparation de caillé de fèves, ou "tofu";

la température du lait de fèves résultant est abaissée à une température constante, appropriée pour la méthode de solidification appliquée;

un agent solidifiant est ajouté au lait de fèves, celui-ci étant maintenu à ladite température constante, le mélange est malaxé en vue de l'obtention d'un mélange homogène; et

le mélange homogène peut se solidifier.

6. Un procédé selon la revendication 5, dans lequel la température du lait de fèves est abaissée à une valeur comprise entre 80° C et 90° C ou entre 70° C et 85° C, et est maintenue dans le même intervalle de températures pendant 10 à 20 minutes.

7. Un procédé selon la revendication 5, dans lequel la température du lait de fèves est abaissée à une valeur constante, comprise entre 5° C et 30° C, dans lequel un agent solidifiant est ajouté au lait de fèves et dans lequel le lait de fèves est rempli avant sa solidification dans des emballages individuels, ces emballages étant hermétiquement scellés et immergés dans un bain d'eau chaude ou de vapeur d'une température de 80° C à 100° C pendant 40 à 60 minutes.

8. Un procédé selon la revendication 5, dans lequel l'agent solidifant est choisi dans le groupe comprenant les delta lactones de l'acide gluconique, les substances amères et le sulfate de calcium.

9. Un cuiseur à vapeur sous pression pour utilisation dans le procédé selon la revendication 1, comprenant une cuve à pression (1) équipée d'un moyen (2) d'amenée du matériau à faire cuire, d'un moyen de vidange du réservoir, d'un moyen d'alimentation en vapeur (3) en-dessous de la surface du matériau dans la cuve et d'un moyen (5) pour délivrer un courant de vapeur sur la surface dudit matériau en vue de la dispersion de la mousse.

## Patentansprüche

1. Ein Verfahren für die Herstellung von Bohnenmilch oder Bohnengallerte, aus rohen Sojabohnen, welche mit dünnen äußeren Hüllen oder Häuten umgeben sind, mit den Verfahrensschritten des Mahlens der Bohnen in feine Partikel und des Kochens dieser feinen Partikel unter Heißdampf, wobei das Verfahren die Schritte umfaßt:

Ermöglichen, daß die rohen Sojabohnen, die ihre dünnen äußeren Hüllen oder Häute tragen, unter Temperaturbereichsbedingungen von bis zu 40°C trocken werden;

Zerquetschen der getrockneten rohen Sojabohnen in Partikel, wodurch die äußeren Hüllen von den Sojabohnen gelöst und dann die gelösten äußeren Hüllen von den Sojabohnenkeimen entfernt werden;

Einweichen der enthäuteten Sojabohnenkeimpartikel in Wasser;

Mahlen der mit Wasser eingeweichten Sojabohnenkeimpartikel in feine Partikelformate;

Kochen der sich ergebenden Partikel unter überhitzten Dampf in einem geschlossenen Dämpfungsgefäß;

Entfernen von irgendwelchem Schaum oder Blasen, die durch Blasen eines Strahls von unter Druck stehendem Dampf in die Oberfläche während des Dampfkochprozesses gebildet werden;

Trennen des durch Dampf gekochten Produkts in feste Stoffe und flüssige Stoffe, welche als ein Bohnenmilchprodukt verwendet werden.

2. Ein Verfahren nach Anspruch 1, wobei der Trocknungsschritt bei niedriger Temperatur im Temperaturbereich zwischen 30°C und 40°C stattfindet, bis die in den rohen Sojabohnen enthaltene Feuchtigkeit auf 10% bis 14% verringert ist.

3. Ein Verfahren nach Anspruch 1, wobei der Verfahrensschritt des Einweichens in Wasser in einem Wassertemperaturbereich zwischen 15°C und 40°C über eine Dauer von 30 bis 60 Min. stattfindet.

4. Ein Verfahren nach Anspruch 1, wobei der Strahl aus komprimierten Dampf, der während des Dampfkochschrittes zugeführt wird, einen Instrumentendruckbereich zwischen 1,0 kg/cm² und 2,5 kg/cm² aufweist, welcher geringfügig höher als der innere Druck ist, welcher innerhalb des Dämpfungsgefäßes erzeugt wird.

5. Ein Verfahren nach wenigstens einem der Ansprüche 1 bis 4, in welchem zur Herstellung von verfestigter Milch aus Bohnen oder Bohnengallerte, die Temperatur der resultierenden Bohnenmilch auf eine konstante Temperatur verringert wird, die für das verwendete Verfestigungsverfahren geeignet ist;

ein Verfestigungsmittel zu der Bohnenmilch hinzugefügt wird, während sie auf der konstanten Temperatur gehalten wird, wobei die Mischung gerührt wird, um eine gleichmäßige Mischung zu bilden;

und der gleichmäßigen Mischung ermöglicht wird, sich zu verfestigen.

6. Verfahren nach Anspruch 5, wobei die Bohnenmilch auf eine Temperatur im Bereich von 80°C bis 90°C oder von 70°C bis 85°C abgekühlt und in dem gleichen Temperaturbereich für eine Dauer zwischen 10 und 20 Min. gehalten wird.

7. Ein Verfahren nach Anspruch 5, wobei die Temperatur der Bohnenmilch auf eine konstante Temperatur im Bereich von 5°C bis 30°C verringert wird, bevor der Milch ermöglicht wird sich zu verfestigen, diese in einzelne Packungen verpackt, diese Packungen hermetisch abgedichtet und in einem Bad von 80°C bis 100°C heißem Wasser oder Dampf für 40 bis 60 Min. angeordnet werden.

8. Verfahren nach Anspruch 5, wobei das Gerinnungsmittel aus der aus Gluconolacton, Bitterstoff und Kalziumsulfat bestehenden Gruppe ausgewählt ist.

9. Eine unter inneren Überdruck setzbare Dämpfungseinrichtung zur Verwendung bei einem Verfahren nach Anspruch 1, welche ein Druckgefäß (1), das mit einer Einrichtung (2) zum Einführen von zu kochendem Material versehen ist, eine Einrichtung zum Ausleeren des Gefäßes, eine Einrichtung (3) zum Zuführen von Dampf unter der Oberfläche des Materials in dem Gefäß und eine Einrichtung (5) zum Zuführen eines Dampfstroms auf die Oberfläche des Materials, um Schaum zu dispergieren.